# EUROPÄISCHE PATENTANMELDUNG

(11) **EP 1 468 596 A2**
(43) Veröffentlichungstag der Anmeldung: **20.10.2004**
(21) Anmeldenummer: 04007483.3
(22) Anmeldetag: 27.03.2004
(51) Int. Cl.: A01C 3/02

(54) **Vorrichtung zum Homogenisieren von Gülle bzw. Hilfsmittel zum Verstellen eines Rührmittels und Güllerührsystem**

(30) Priorität: 16.04.2003 DE 10317540
(71) Anmelder: Reck, Anton, 88422 Betzenweiler (DE)
(72) Erfinder: Reck, Anton, 88422 Betzenweiler (DE)
(74) Vertreter: Patentanwälte Eisele, Otten, Roth& Dobler

(57) **Zusammenfassung**

Es wird eine Vorrichtung (2) zum Homogenisieren von Gülle mit einer Antriebswelle (4) und einem ersten und einem zweiten Rührmittel (5, 6) zum Eintauchen in die zu homogenisierende Gülle, die von der Antriebswelle (4) in Rotation versetzbar sind, vorgeschlagen, wobei die beiden Rührmittel (5, 6) in Bezug zur Antriebswelle (4) in axialer Richtung voneinander beabstandet positioniert sind. Um die gesammelte Gülle wirtschaftlich vorteilhaft zu nutzen, ist das erste Rührmittel (5) derart an der Vorrichtung (2) angebracht, dass es in einer in der Gülle eingetauchten Position von außerhalb der Gülle in Bezug zur Antriebswelle (4) in axialer Richtung von einer Position in eine andere Position bringbar und dort festlegbar ist.

Außerdem wird ein Hilfsmittel (3) zum Verstellen eines Rührmittels (5) und ein Güllerührsystem (1) vorgeschlagen.

## Beschreibung

### Stand der Technik

In der modernen Viehstallhaltung wird die in teils erheblichen Mengen anfallende Gülle am Entstehungsort zur Vermeidung von aufwändigen Transportsystemen aufgefangen und für eine Weiterverwertung gesammelt. Die Gülle wird in der Regel unterhalb des Stallbodens in Kanalsystemen aufgefangen und gelagert. Begünstigt durch eine Reihe unterschiedlichster Faktoren entstehen häufig erhebliche Schwimmdecken bzw. oberflächennahe Schwimmschichten. Schwimmschichten auf der Gülle führen zu beträchtlichen Problemen im Hinblick auf die Güllelagerung, -behandlung und -ausbringung. Um eine wirtschaftliche Nutzung der Gülle zu gewährleisten, ist es von großer Bedeutung, die Gülle richtig zu behandeln, was insbesondere eine Homogenisierung der Gülle umfasst.

Zum Homogenisieren der Gülle werden Rühr-Vorrichtungen eingesetzt, wobei einige Anstrengungen zur Eindämmung des Problems von Schwimmdecken auf der Gülle unternommen werden. Ein Lösungsversuch stützt sich auf sogenannte Flügel-Rührwerke. Dabei kommen entlang einer Antriebswelle z.B. ein frei verschieblich angeordneter Rührflügel zum Einsatz, der mit einem Schwimmer fest verbunden ist. Je nach Auftriebsverhältnissen bzw. abhängig von der Konsistenz der Gülle und abhängig von der Rührdrehzahl ergibt sich die Rührerposition längs der Antriebswelle. Diese Rührer sind jedoch nicht oder nur unzureichend geeignet eine vorhandene Schwimmdecke zu beseitigen. Bei vergleichsweise niedrigen Drehzahlen und großen Propellerdurchmessern, z.B. über 2 m, neigen diese Rührer dazu, sich nach oben aus dem Bereich der Gülle herauszubewegen bzw. in die Gülle in tiefere Schichten abzusinken. In beiden Fällen wird die Schwimmdecke nicht effektiv zerstört. Rührer mit Propellerdurchmessern über 2 m sind in Güllekanälen mit einer Kanaltiefe unter einem Meter oder Kanalbreite unter 2 m nicht zu betreiben.

Im Gegensatz dazu muss ein effektiver Schwimmdecken-Rührer, insbesondere auch bei höheren Drehzahlen von ca. 400 bis 1000 Umdrehungen pro Minute, ca. 20 bis 60 cm unterhalb der Schwimmdecke in der Gülle arbeiten. Die Schwimmdecke wird dabei wirkungsvoll bekämpft, indem diese aufgerissen, angesaugt und nach unten zum druckaufbauenden Propeller weggedrückt wird. In der Folge werden so weitere Schwimmdeckenbereiche zum Rührer herangeführt, wobei nach und nach die gesamte Schwimmdecke in die Gülle eingemischt wird.

Diesen Erkenntnissen liegt ein weitergehenderer Lösungsansatz mit einem fest an der Antriebswelle positionierten Schwimmdeckenpropeller zugrunde. In allen Drehzahlbereichen kann der Schwimmdeckenpropeller im genannten Bereich unter der Schwimmdecke arbeiten. Ein solcher Schwimmdeckenpropeller arbeitet bei einem konstanten Gülleniveau nahezu optimal.

Um bei sich änderndem Gülleniveau den Schwimmdeckenpropeller in eine entsprechend angepasste Höhenposition an der Antriebswelle zu bringen, ist dieser z.B. mit einer Verschraubung an der Antriebswelle lösbar positioniert. Ein Verstellen des Schwimmdeckenpropellers in eine andere Position an der Antriebswelle ist in der Praxis mit einem nicht unerheblichen Aufwand verbunden. Hierzu muss in der Regel der gesamte Güllemixer aus der Gülle herausgenommen, grob gereinigt und nach der Verstellung des Schwimmdeckenpropellers wieder in diese eingebracht werden. Bei häufig wechselnden Gülle-Niveaus ist dies aber relativ aufwändig und nicht praxistauglich.

Aufgabe der Erfindung ist es, eine Vorrichtung bzw. ein System bereitzustellen, wodurch die gesammelte Gülle wirtschaftlich vorteilhaft nutzbar ist und die oben genannten Nachteile vermieden werden. Insbesondere soll eine gut durchmischte Gülle ohne nennenswerte oberflächennahe Schwimmschichten besonders effektiv gewährleistet werden.

Diese Aufgabe wird durch die in Anspruch 1 bestimmte Vorrichtung und das in Anspruch 6 bestimmte Hilfsmittel bzw. durch das in Anspruch 9 vorgeschlagene System gelöst.

Ausgehend von den Merkmalen des Oberbegriffs des unabhängigen Anspruchs 1 wird die Aufgabe erfindungsgemäß dadurch gelöst, dass das erste Rührmittel derart an der Vorrichtung angebracht ist, dass es in einer in der Gülle eingetauchten Position von außerhalb der Gülle in Bezug zur Antriebswelle in axialer Richtung von einer Position in eine andere Position bringbar und dort festlegbar ist.

Das erste Rührmittel, das insbesondere zur Vermeidung und Beseitigung von Schwimmdecken vorgesehen ist, wird nachfolgend auch als Schwimmdecken-Propeller bezeichnet. Der Schwimmdecken-Propeller kann erfindungsgemäß durch entsprechende von außen zu bedienende Anbringungsmittel einfach und schnell in eine nahezu optimale Arbeitsposition gebracht werden, wodurch die Schwimmdecke effektiv aufgelöst bzw. eine Neubildung verhindert wird. Dabei muss die Vorrichtung insbesondere nicht aus ihrer Eintauchstellung in der Gülle zum Verstellen des Schwimmdecken-Propellers herausgenommen werden und relativ aufwändige Arbeitsschritte und ein zumindest teilweises Reinigen der Gülle-Homogenisierungseinrichtung werden vermieden. Dazu sind die Anbringungsmittel so ausgestattet, dass sich die ersten Rührmittel von außen, d.h. gegebenenfalls 1 bis 2 m vom Rührmittel entfernt, von einer Bedienperson verstellen lassen.

In einer besonders bevorzugten Ausgestaltung der Erfindung ist das erste Rührmittel mittels eines Schnappmechanismus an der Antriebswelle angeordnet, so dass es aus einer Einrastposition in eine von mehreren vorgegebenen anderen Einrastpositionen bringbar ist. Als Schnappmechanismus ist beispielsweise ein federbelasteter Bolzen, z.B. Rundstift am Rührelement vorzusehen, der in eine passende Bohrung in der z.B. profilierten oder genuteten Antriebswelle einrasten kann.

Mit einem Schnappmechanismus kann der Schwimmdecken-Propeller einfach und zuverlässig an der Antriebswelle gesichert, aber auch verstellt werden. Durch z.B. eine Feder kann eine dauerhaft vorhandene Einrastkraft aufgebracht werden, die während des Verstellens des Schwimmdecken-Propellers überwunden werden muss. Ein unbeabsichtigtes Ausrasten des Schwimmdecken-Propellers wird durch eine entsprechend dimensionierte Feder vermieden. Erst durch ein gezieltes Eingreifen wird die Federkraft überwunden. Sobald die von außen aufgebrachte Verstellkraft nicht mehr einwirkt, kann es wieder zu einem sicheren Einrasten des Schwimmdecken-Propellers durch die Einrastkraft kommen. Viele Einrastpositionen begünstigen ein schnelles Wieder-Einrasten des ausgerasteten Schwimmdecken-Propellers.

Vorteilhafterweise kann der Schwimmdecken-Propeller in eine von mehreren Arbeitspositionen über nahezu den gesamten eingetauchten Abschnitt der Vorrichtung gebracht werden. Dazu sind in der Antriebswelle, vorzugsweise über ihre gesamte Länge verteilt, eine Reihe vorgegebener zumeist mit einem gleichmäßigen Rasterabstand ausgebildete Rastpositionen vorgesehen.

Neben der Bekämpfung von Schwimmschichten ist es damit außerdem vorteilhaft möglich, den Schwimmdecken-Propeller, auch in tieferen Schichten der Gülle zu positionieren, z.B. tiefer als 60 cm unter der Gülleoberfläche. Dies ist besonders dann von Vorteil, wenn die Durchmischung in den unteren Gülleschichten verstärkt werden soll, z.B. wenn das zweite Rührmittel dies nicht ausreichend gewährleistet. Außerdem ist es dadurch vorteilhafterweise möglich, auch bei sehr unterschiedlichen Gülleniveaus, d.h. auch bei maximal bzw. minimal möglichen Eintauchtiefen der Vorrichtung in der Gülle, den Schwimmdecken-Propeller in Bezug zur Eintauchtiefe in die gewünschte Position an der Antriebswelle zu bringen.

Eine vorteilhafte Ausführungsform der Erfindung sieht vor, dass ein zur Antriebswelle zumindest annähernd parallel geführtes Rahmenteil zur Stabilisierung im Bereich des ersten und zweiten Rührmittels vorgesehen ist. Ein vorgeschlagenes Rahmenteil dient zur Stabilisierung der Vorrichtung z.B. gegen mechanische Beanspruchungen wie Torsions- und/oder Biegebeanspruchung. So kann vorteilhafterweise besonders bei größeren Abmessungen der Vorrichtung längs der Antriebswelle von z.B. über 2 m eine Verdrehung und Verbiegung dieser, insbesondere bei hohen Drehzahlen der Antriebswelle bzw. Rührmittel verhindert werden.

Gemäß einer besonderen Ausführungsform des Erfindungsgegenstandes ist die Antriebswelle als profilierte, insbesondere Vierkant-Antriebswelle ausgebildet. Mit einer Vierkant-Antriebswelle können die Rührmittel besonders verdrehsicher und robust an der Antriebswelle angebracht werden. Durch die Vierkantform der Antriebswelle und einer daran angebrachten Nabe des Propellers mit entsprechend angepasstem Innenvierkant, kann der Schwimmdecken-Propeller bei Verstellung einfach und sicher geführt entlang der Antriebswelle verschoben werden.

In einer bevorzugten Ausbildung des Erfindungsgegenstandes wird vorgeschlagen, dass das erste Rührmittel mit einer Spindel von einer Position in eine andere Position bringbar und dort festlegbar ist. Beispielsweise kann die Spindel bzw. Gewindestange in der Antriebswelle untergebracht sein. Am unteren Ende der Spindel ist das erste Rührmittel befestigt, wozu die Antriebswelle z.B. teilweise geschlitzt ausgeführt ist. In einer Aufnahme beispielsweise mit passendem Innengewinde kann die Spindel im oberen Bereich der Gülle-Homogenisierungsvorrichtung gelagert werden, wodurch bei Verdrehung der Spindel von Hand oder motorisch das erste Rührmittel längs der Antriebswelle auf- bzw. abwärts bewegt wird. Vorteilhafterweise kann damit besonders kompakt eine stufenlos einstellbare Position des ersten Rührmittels an der Antriebswelle realisiert werden.

Außerdem wird ein Hilfsmittel zum Verstellen eines Rührmittels einer Gülle-Homogenisierungsvorrichtung in einer in die Gülle eingetauchten Position, bei welcher das Rührmittel an der Vorrichtung über einen Schnappmechanismus verschieb- und arretierbar angebracht ist, mit einer Stangenanordnung und einer Aufnahme im Endbereich der Stangenanordnung zum Eingriff in den Schnappmechanismus vorgeschlagen. Die Aufnahme ist so angeordnet, dass durch Anheben und Senken des Hilfsmittels sich diese ebenfalls zum Beispiel unter Durchführung einer Schwenkbewegung hebt und senkt und damit ein Schnappmechanismus betätigt werden kann. Die Aufnahme ist in einer besonders einfachen Ausgestaltung vorzugsweise gabelförmig. Das Hilfsmittel soll eine Verstellung eines Rührmittels von außerhalb der Gülle im eingetauchten Zustand der Homogenisierungsvorrichtung ermöglichen.

Beispielsweise kann mit wenigen Schritten, z.B. handbetätigt, ein Schwimmdecken-Propeller verstellt werden, ohne dass der Doppelpropeller-Rührer aus der Gülle herausgenommen werden muss, was insbesondere bei größeren Abmessungen des Doppelpropeller-Rührers von z.B. mehreren Metern relativ aufwändig ist. Außerdem wird dadurch ein möglicher direkter Kontakt von Personen mit der Gülle durch z.B. das zumindest teilweise Herausnehmen des Doppelpropeller-Rührers aus der Gülle weitgehend vermieden, was u.a. unter hygienischen Gesichtspunkten von Vorteil ist.

Eine erfindungsgemäße Ausführungsvariante des Hilfsmittels zum Verstellen eines Rührmittels zeichnet sich dadurch aus, dass für das Heben und Senken der Aufnahme die Stangenanordnung in ihrem Endbereich eine Lagereinheit zum Abstützen auf der Antriebswelle umfasst. Somit kann das Hilfsmittel und damit die Aufnahme in einer definierten und auf der Antriebswelle fest abgestützten Position gehalten werden. Das Hilfsmittel wird durch die Lagereinheit gegen z.B. ein Abrutschen oder Verkippen aus der richtigen Lage gesichert und dabei durch das Eigengewicht der Stangenanordnung unterstützt. Zur Ausbildung der Lagereinheit kann die Stangenanordnung in ihrem Endbereich sehr einfach z.B. durch entsprechende an die Kontur der Antriebswelle angepasste Formgebung, z.B. Ausnehmungen, sicher aufgesetzt bzw. gehoben und gesenkt werden.

Eine besonders vorteilhafte Ausführungsform des Verstell-Hilfsmittels zeichnet sich durch Schneidmittel im Endbereich der Stangenanordnung zum Beseitigen von Verzopfungen an der Antriebswelle im Bereich des ersten Rührmittels aus. Durch die Feststoffanteile in der Gülle besonders im Bereich der Schwimmdecke, können begünstigt durch faserartige Komponenten, wie z.B. Einstreumittel oder Futterreste, an der Antriebswelle bzw. an den Rührmitteln mit der Zeit sich aufbauende Anlagerungen entstehen. Diese Anlagerungen sind unerwünscht, da sie die Rührwirkung der Gülle-Homogenisierungsvorrichtung nachteilig beeinflussen. Um diesen Anlagerungen entgegenzuwirken kann ein Schneidwerk z.B. an einem vorderen Endbereich des Hilfsmittels vorgesehen werden. Vorteilhafterweise kann beim Verstellen des Schwimmdecken-Propellers z.B. durch das Anheben und Senken des Hilfsmittels gleichzeitig eine teilweise Beseitigung von Verzopfungen erfolgen. Das Verstellen kann damit außerdem einfacher erfolgen und der Schnappmechanismus kann sicherer funktionieren, da keine Verzopfungen bzw. Anlagerungen den Schnappmechanismus behindern.

Schließlich wird in einer weitern Ausbildung des Gegenstandes der Erfindung ein Güllerührsystem mit einer Vorrichtung nach einem der Ansprüche 1 bis 5 und einem Hilfsmittel nach einem der Ansprüche 6 bis 8 vorgeschlagen. Damit lassen sich die oben erwähnten Vorteile der Gülle-Homogenisierungsvorrichtung und des Verstellhilfsmittels kombinieren.

Weitere Einzelheiten der Erfindung werden in der Zeichnung anhand von dargestellten Ausführungsbeispielen beschrieben.
- Fig. 1: zeigt ein erfindungsgemäßes Güllerührsystem in Arbeitsposition und eine teilweise dargestellte Schnittansicht eines Rinderstalls mit Gülle-Sammelkanal,
- Fig. 2: zeigt eine perspektivische Ansicht eines anderen Ausführungsbeispiels eines erfindungsgemäßen Güllerührsystems,

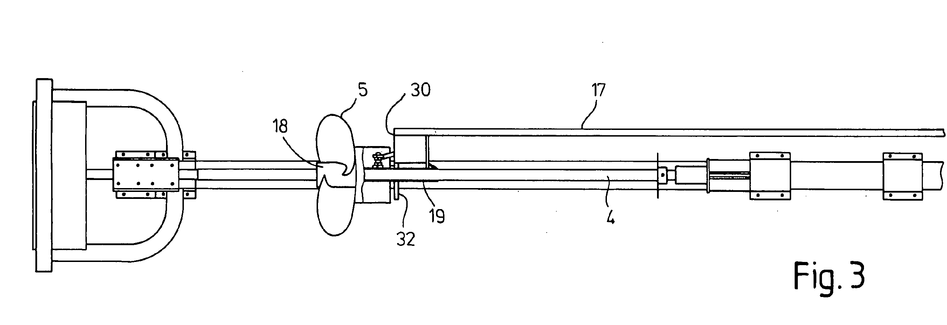

- Fig. 3: zeigt eine Teil-Seitenansicht teilweise geschnitten des Güllerührsystems gemäß Fig. 2 und
- Fig. 4: zeigt eine Detailansicht eines Ausschnitts des Güllerührsystems gemäß Fig. 3, beim Betätigen eines Federbolzens.

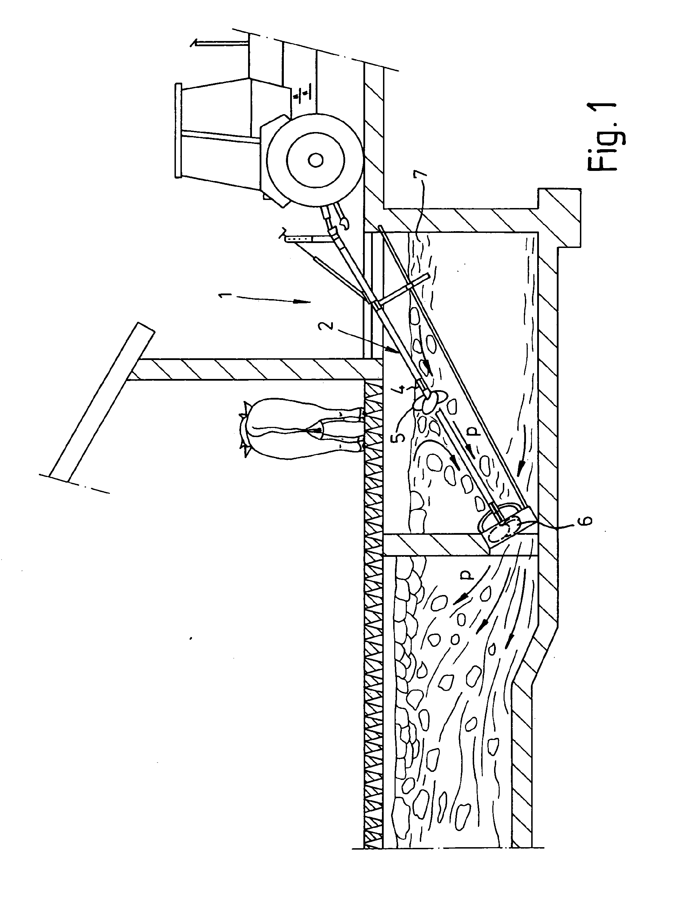

In Fig. 1 ist ein in der Gülle arbeitendes erfindungsgemäßes Güllerührsystem 1 mit einem Doppelpropeller-Rührer 2 und einer Neigungsverstelleinrichtung dargestellt. Eine Antriebswelle 4 des Doppelpropeller-Rührers 2 wird dabei von außen, z.B. über einen Schlepper angetrieben. Am Doppelpropeller-Rührer 2 ist ein Schwimmdecken-Propeller 5 in seiner Arbeitsposition im Bereich einer auf der Gülle gebildeten Schwimmdecke 7 positioniert. Am unteren Ende der Antriebswelle 4 ist ein Druck-Propeller 6 angeordnet. Die Strömungsverhältnisse in der Gülle bei rotierenden Propellern 5, 6 sind mit Pfeilen P schematisch angedeutet.

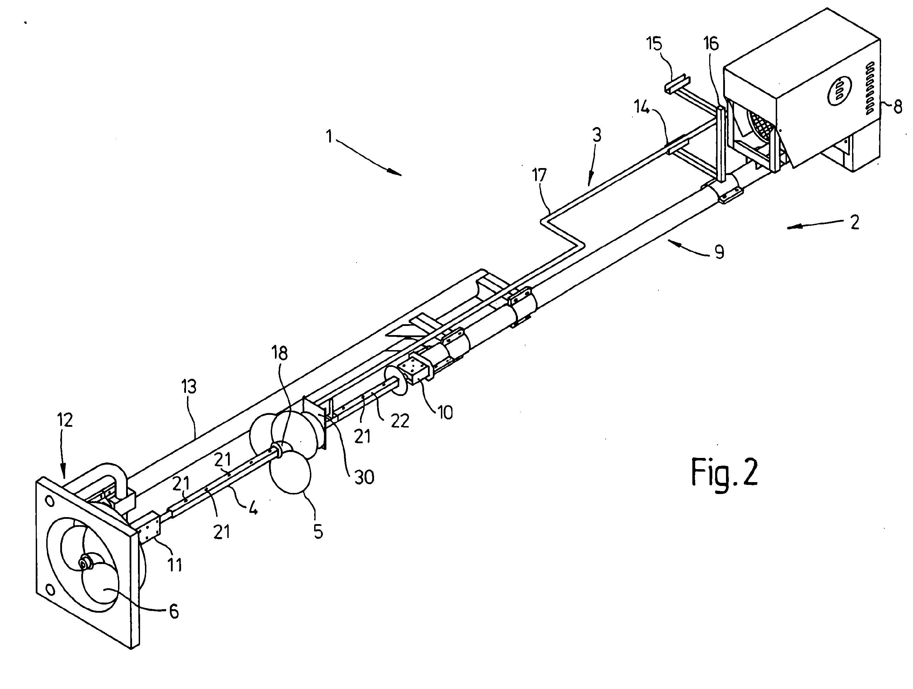

Im dargestellten Ausführungsbeispiel gemäß Fig. 2 ist am oberen Ende des Doppelpropeller-Rührers 2 ein Elektromotor 8 mit Gehäuse positioniert. An den Elektromotor 8 schließt sich ein Rohrabschnitt 9 an, in dem z.B. eine von einem Rohr umgebene Verbindungswelle (nicht sichtbar) zwischen Elektromotor 8 und Antriebswelle 4 untergebracht ist. Ein an den Rohrabschnitt 9 anschließendes Mittellager 10 dient zur oberen Lagerung der als Vierkant ausgebildeten Antriebswelle 4. An ihrem unteren Ende wird die Antriebswelle 4 in einem unteren Lagerbock 11 gehalten. Die beiden Propeller 5, 6 sind an der Antriebswelle 4 angebracht. Im Bereich des Druck-Propellers 6 ist außerdem eine Düsenanordnung 12 ausgebildet. Ein Rahmenteil 13 dient im Wesentlichen zur Stabilisierung des Doppelpropeller-Rührers 2. Die beiden Propeller 5 und 6 sind beispielhaft mit drei Schaufelflächen ausgeführt. Es sind aber auch eine Reihe anderer Propellerformen bzw. Rührmittel einsetzbar.

Das gezeigte Ausführungsbeispiel gemäß Fig. 2 ist so ausgebildet, dass bei Stillstand der Antriebswelle 4 der Schwimmdecken-Propeller 5 mit Hilfe eines Verstellgestänges 3 verstellt werden kann. Im Zustand der rotierenden Antriebswelle 4 ist dafür Sorge zu tragen, dass das Verstellgestänge 3 nicht mit rotierenden Teilen des Doppelpropeller-Rührers 2 in Kontakt kommen kann, z.B. indem das Verstellgestänge 3 ganz von dem Doppelpropeller-Rührer 2 entfernt wird.

In der in Fig. 2 gezeigten Stellung ist an dem Doppelpropeller-Rührer 2 das Verstellgestänge 3 in einer Eingriff-Position angebracht. Das Verstellgestänge weist eine Stange 17 auf, die von ihrem hinteren Ende in der Nähe des Elektromotors 8 entlang des Rohrabschnitts 9 bis in den Bereich der Antriebswelle 4 verläuft. An ihrem hinteren Ende ist das Verstellgestänge 3 am Doppelpropeller-Rührer 2 in einem ersten Auflageprofil 14 aufliegend gehalten und kann in diesem in Längsrichtung des Doppelpropeller-Rührers 2 teilweise verschoben werden. Die Stange 17 des Verstellgestänges 3 ist bevorzugt so lange, dass sie bei Bedienung in der Nähe des oberen Endes des Doppelpropeller-Rührers 2 bis nahe an das untere Ende der Antriebswelle 4 reicht. In etwa auf halber Länge ist die Stange 17 zweifach um je 90° abgewinkelt, so dass bei Benutzung das Verstellgestänge 3 sein vorderer Teil näher an der Antriebswelle 4 bzw. dem Rohrabschnitt 9 verläuft als der hintere Teil. Das Verstellgestänge 3 wird in der Regel von Hand bedient und kann in ein zweites Auflageprofil 15 unter einem dadurch vorgegebenen Winkel zur Achse der Antriebswelle 4 abgelegt werden. Das erste und zweite Auflagenprofil 14, 15 ist an einem Träger 16 angebracht, der am Rohrabschnitt 9 montiert ist.

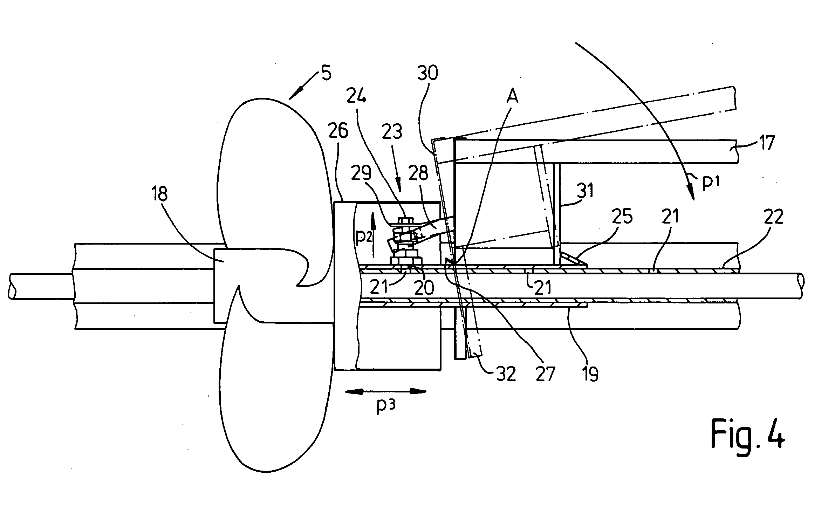

Der zu verstellende Schwimmdecken-Propeller 5 ist an einer mit Innenvierkant versehenen Nabe 18 ausgebildet, an dem der Propeller 5 verdrehsicher auf der vierkantförmigen Antriebswelle 4 gelagert ist. Entlang einer Vierkantfläche 22 der Antriebswelle 4 sind in dieser Öffnungen, z.B. als Einrastlöcher 21 (siehe Fig. 2, 4) in regelmäßigen Abständen ausgebildet. Die Nabe 18 ist durch eine Nabenverlängerung 19 nach oben in antriebsseitiger Richtung verlängert. Auf der Nabenverlängerung 19 ist zur Ausbildung eines Schnappmechanismus 23 ein Bolzen 24 federnd geführt angebracht, der in radialer Richtung zur Längsachse der Antriebswelle 4 beweglich ausgebildet ist. Der Federbolzen 24 wird federbelastet durch ein Loch 20 in der Nabenverlängerung 19 gegen die Vierkantfläche 22 gedrückt. Wenn das Loch 20 und eines der Einrastlöcher 21 zueinander fluchten, kann der Federbolzen 24 durch beide Löcher 20, 21 durchtreten und federnd einrasten. Der Schwimmdecken-Propeller 5 ist wie gezeigt durch den Schnappmechanismus 23 in gesicherter Rast- bzw. Arbeitsposition an der Antriebswelle 4 positioniert.

Bei Stillstand der Antriebswelle 4 kann der Schwimmdecken-Propeller 5 aus der gesicherten Position verstellt werden. Dazu wird das Verstellgestänge 3 an die Antriebswelle 4 herangeführt und zunächst in die in Figur 4 mit Strichlinien dargestellte Eingriff-Stellung gebracht, bei der das Verstellgestänge 3 in Bezug zur Antriebswelle 4 z.B. einen Winkel von ca. 10° einschließt. Zum sicheren und positionsrichtigen Aufsetzen an der Antriebswelle 4, weist das Verstellgestänge 3 nahe seines vorderen Endes ein auf der Vierkantfläche 22 aufliegendes Stirnblech 30 und hier beispielhaft eine Seitenführung 32 auf.

Um mit dem vorderen Ende des Verstellgestänges 3 in den Schnappmechanismus 23 "einzufädeln", gleitet ein umgebogener Kantenabschnitt 27 des Stirnblechs 30 von der Antriebsseite auf der Vierkantfläche 22 entlang bis der Kantenabschnitt 27 an einer Anschrägung 25 am oberen Rand der Nabenverlängerung 19 ansteht. Der Kantenabschnitt 27 wirkt so mit der Anschrägung 25 zusammen, dass bei einem Anheben des Verstellgestänges 3, z.B. um ca. 10° in Bezug zur Antriebswelle 4, der Kantenabschnitt 27 über die Anschrägung 25 auf die Nabenverlängerung 19 rutschen kann. Dabei rutscht das Verstellgestänge 3 so weit vor, bis das Stirnblech 30 an eine zylindrische Hülse 26 anstößt. Die zylindrische Hülse 26 ist oberhalb am Schwimmdecken-Propeller 5 an der Nabe angebracht und umgibt radial beabstandet einen Bereich der Nabenverlängerung 19, in dem der Federbolzen 24 positioniert ist. Durch das Anheben, d.h. Abwinkeln des Verstellgestänges 3 kommt ein Gabel-Kipp-Element 28, das stirnseitig am Stirnblech 30 ausgebildet ist, in die passende Eingriff-Position mit dem eingerasteten Federbolzen 24 (gestrichelte Darstellung in Fig. 4). Das nach vorne offene, z.B. annähernd U- bzw. V-förmige Gabel-Kipp-Element 28 wird durch zwei gerade Zinken gebildet, die leicht schräg nach unten zum Kantenabschnitt 27 des Stirnblechs 30 gerichtet sind.

Das Gabel-Kipp-Element 28 wirkt dabei mit dem Federbolzen 24 derart zusammen, dass es beispielsweise unter einer Lochscheibe 29 am Federbolzens 24 diesen teilweise umgreift. Wird nun das Verstellgestänge 3 in Pfeilrichtung P1 in Fig. 4 nach unten gesenkt und nahezu parallel zur Antriebswelle 4 gebracht, drückt das Gabel-Kipp-Element 28 die Lochscheibe 29 und damit den Federbolzen 24 aus der Einrastposition in Richtung des Pfeils P2 (siehe Fig. 4) und der Federbolzen 24 wird aus dem Einrastloch 21 herausbewegt. Beim Verkippen des Verstellgestänges 3 bildet die Berührungslinie des Kantenabschnitts 27 mit der Nabenverlängerung 19 eine KippAchse A, um welche das Verstellgestänge 3 sicher verkippt werden kann.

Der Schwimmdecken-Propeller 5 ist nun an der Antriebswelle 4 frei verschieblich. Das Verstellgestänge 3 kann bis zu einer nahezu parallelen Ausrichtung zur Antriebswelle 4 gebracht werden. Dabei steht ein unteres Ende eines Stegelements 31 des Verstellgestänges 3, das an diesem etwas entfernt vom vorderen Ende angebracht ist, auf der Nabenverlängerung 19 auf und grenzt an die Anschrägung 25, wobei das Verstellgestänge 3 gegen ein Abrutschen von der Nabenverlängerung 19 in Richtung des Antriebs 4 gesichert ist. In dieser Position kann durch Ziehen oder Drücken am Verstellgestänge 3 mit diesem der Schwimmdecken-Propeller aus der Rastposition gebracht werden und längs der Antriebswelle 4 in Richtung der Pfeile P3 an dieser verschoben werden.

Zum Verstellen des Schwimmdecken-Propellers 5 muss das Verstellgestänge 3 im unteren ersten Auflageprofil 14 liegen. Nach dem Verschieben des Schwimmdecken-Propellers 5 in die Nähe der gewünschten neuen Rastposition, muss das Verstellgestänge 3 wieder angehoben, d.h. abgewinkelt werden und in das obere zweite Auflageprofil 15 gelegt werden, damit der Federbolzen 24 federbelastet gegen die Vierkantfläche 22 drücken kann. Nur in den wenigsten Fällen wird dabei der Federbolzen 24 genau auf ein Einrastloch 21 treffen und dort einrasten. In der Regel muss der Schwimmdecken-Propeller 5 sich noch ein Stück entlang der Antriebswelle 4 bewegen, bis der Federbolzen 24 in das nächstpositionierte Einrastloch 21 einrasten kann. Dies kann vorteilhafterweise mit dem abgewinkelten Verstellgestänge 3 erfolgen, das beim Verschieben nach vorne entweder mit dem Stirnblech 30 an der Hülse 26 oder andernfalls mit dem Kantenabschnitt 27 an der Anschrägung 25 ansteht.

Alternativ kann die Schiebstange 3 auch ganz von der Antriebswelle 4 entfernt werden und der Schwimmdecken-Propeller 3 wird gewichtsbelastet bzw. unter Wirkung einer nachfolgenden Rotationsbewegung entlang der Antriebswelle 4 verrutschen bis der Federbolzen 24 in eines der Einrastlöcher 21 einschnappt.

Damit das Verstellgestänge 3 an der geeigneten Vierkantfläche 22 der vier Außenflächen der Antriebswelle 4 an dieser angesetzt werden kann, ist eine Markierung vorzusehen, z.B. eine Keilriemenscheibenmarkierung. Mit Hilfe der Keilriemenscheibenmarkierung kann bei Stillstand eines Keilriemenantriebs überprüft werden, ob die Antriebswelle 4 in der geeigneten Position, Schnappmechanismus 23 nach oben zeigend, ist. Gegebenenfalls kann die Antriebswelle 4 in die geeigneten Position zum Ansetzen des Verstellgestänges 3 gebracht werden.

Zur Verbesserung eines Handeingriffs an dem Verstellgestänge 3 können geeignete Handgriffe an dieser vorgesehen werden.

### Bezugszeichenliste:

- 1: Güllerührsystem
- 2: Doppelpropeller-Rührer
- 3: Verstellgestänge
- 4: Antriebswelle
- 5: Schwimmdecken-Propeller
- 6: Druckpropeller
- 7: Schwimmdecke
- 8: Elektromotor
- 9: Rohrabschnitt
- 10: Mittellager
- 11: Lagerbock
- 12: Düsenanordnung
- 13: Rahmenteil
- 14: erstes Auflageprofil
- 15: zweites Auflageprofil
- 16: Träger
- 17: Stange
- 18: Nabe
- 19: Nabenverlängerung
- 20: Loch
- 21: Einrastloch
- 22: Vierkantfläche
- 23: Schnappmechanismus
- 24: Federbolzen
- 25: Anschrägung
- 26: Hülse
- 27: Kantenabschnitt
- 28: Gabel-Kipp-Element
- 29: Lochscheibe
- 30: Stirnblech
- 31: Stegelement
- 32: Seitenführung

## Patentansprüche

1. Vorrichtung (2) zum Homogenisieren von Gülle mit einer Antriebswelle (4) und einem ersten und einem zweiten Rührmittel (5, 6) zum Eintauchen in die zu homogenisierende Gülle, die von der Antriebswelle (4) in Rotation versetzbar sind, wobei die beiden Rührmittel (5, 6) in Bezug zur Antriebswelle (4) in axialer Richtung voneinander beabstandet positioniert sind, wobei das erste Rührmittel (5) in Bezug zur Antriebswelle (4) in axialer Richtung näher als das zweite Rührmittel (6) am antriebsseitigen Ende der Antriebswelle (4) angeordnet ist, **dadurch gekennzeichnet, dass** das erste Rührmittel (5) derart an der Vorrichtung (2) angebracht ist, dass es in einer in der Gülle eingetauchten Position von außerhalb der Gülle in Bezug zur Antriebswelle (4) in axialer Richtung von einer Position in eine andere Position bringbar und dort festlegbar ist.

2. Vorrichtung nach Anspruch 1, **dadurch gekennzeichnet, dass** das erste Rührmittel (5) mittels eines Schnappmechanismus (23) an der Antriebswelle (4) angeordnet ist, so dass es aus einer Einrastposition in eine von mehreren vorgegebenen anderen Einrastpositionen bringbar ist.

3. Vorrichtung nach Anspruch 1 oder 2, **dadurch gekennzeichnet, dass** ein zur Antriebswelle (4) zumindest annähernd parallel geführtes Rahmenteil (13) zur Stabilisierung im Bereich des ersten und zweiten Rührmittels (5, 6) vorgesehen ist.

4. Vorrichtung nach einem der vorhergehenden Ansprüche, **dadurch gekennzeichnet, dass** die Antriebswelle (4) als profilierte, z.B. genutete oder Vierkant-Antriebswelle ausgebildet ist.

5. Vorrichtung nach einem der vorhergehenden Ansprüche, **dadurch gekennzeichnet, dass** das erste Rührmittel mit einer Spindel von einer Position in eine andere Position bringbar und dort festlegbar ist.

6. Hilfsmittel (3) zum Verstellen eines Rührmittels (5) einer Gülle-Homogenisierungsvorrichtung (2) in einer in die Gülle eingetauchten Position, bei welcher das Rührmittel (5) an der Vorrichtung (2) über einen Schnappmechanismus (23) verschieb- und arretierbar angebracht ist, mit einer Stangenanordnung (17) und einer Aufnahme (28) im Endbereich der Stangenanordnung (17) zum eingriff in den Schnappmechanismus (23), die so angeordnet ist, dass die Aufnahme (28) durch Anheben und Senken des Hilfsmittels (3) sich ebenfalls hebt und senkt und damit den Schnappmechanismus (23) betätigen kann.

7. Hilfsmittel nach Anspruch 6, **dadurch gekennzeichnet, dass** für das Heben und Senken der Aufnahme (28) die Stangenanordnung (17) in ihrem Endbereich eine Lagereinheit zum Abstützen auf der Antriebswelle (4) umfasst.

8. Hilfsmittel nach Anspruch 6 oder 7, **dadurch gekennzeichnet, dass** im Endbereich der Stangenanordnung (17) Schneidmittel zum Beseitigen von Verzopfungen an der Antriebswelle (4) im Bereich des ersten Rührmittels (5) umfasst.

9. Güllerührsystem (1) mit einer Vorrichtung (2) nach einem der Ansprüche 1 bis 5 und einem Hilfsmittel (3) nach einem der Ansprüche 6 bis 8.
